Europäisches Patentamt

(19) European Patent Office

Office européen des brevets

(11) Publication number: 0 254 827
A2

(12) **EUROPEAN PATENT APPLICATION**

(21) Application number: 87106749.2

(22) Date of filing: 08.05.87

(51) Int. Cl.³: **F 16 D 69/04**
**C 23 C 4/02, C 23 C 4/04**
**F 16 D 69/02, B 23 P 15/18**

(30) Priority: 21.07.86 US 888296

(43) Date of publication of application:
03.02.88 Bulletin 88/5

(84) Designated Contracting States:
DE ES FR GB IT SE

(71) Applicant: ALLIED CORPORATION
Columbia Road and Park Avenue P.O. Box 2245R (Law Dept.)
Morristown New Jersey 07960(US)

(72) Inventor: Hakim, Shabbir Abbas
37 Latham Village Lane No. 32
Latham New York 12110(US)

(74) Representative: Brullé, Jean et al,
Division Technique Service Brevets Bendix Europe 126,
rue de Stalingrad
F-93700 Drancy(FR)

(54) A process of attaching a friction lining to a metal backing plate to produce brake lining.

(57) A process for attaching a friction material (20) to a metal backing plate (22) to produce a brake lining (24). After a surface (36) on the metal backing plate (22) is cleaned, it is transported to operational stations where compressed air atomizes a molten metal (50) and projects the molten metal (50) onto the cleaned surface (36). The molten metal (50) on striking the cleaned surface (36) adheres thereto to form a rough surface (38). Thereafter, the friction material (20) is aligned over the rough surface (38). A compressive force (F) is applied to the friction material (20) while the temperature is raised to cure the resin in the friction material (20). As the resin cures, a portion flows into the rough surface (38) to form a mechanical bond when the resin is fully cured.

FIG. I

EP 0 254 827 A2

# A PROCESS OF ATTACHING A FRICTION
## MATERIAL TO A METAL BACKING PLATE
### TO PRODUCE A BRAKE LINING

### BACKGROUND OF THE INVENTION

This invention relates to a process of spraying a molten metal onto a metal backing plate to produce a rough surface. Thereafter, a friction material is placed on the rough surface and placed in a cure press to cure the resin therein. During the curing, a compressive force is applied to the friction material causing a portion of the resin to flow into the rough surface and establish a mechanical bond which holds the friction lining to the metal backing place to produce the brake lining.

### IN THE PRIOR ART

A multitude of structures have been suggested for the engagement of a friction material to a backing plate. Such structures have found great utility in braking mechanisms for various vehicles and machinery, clutch mechanisms for the same, and other devices which require the engagement of two materials along an axis where no interlocking engaging structure can exist.

Because the frictional surfaces must withstand the tremendous pressures and temperatures exerted by contact of the two materials, these materials are generally bonded to an internal structural support. The frictional property of the system depends on the brake environment. Examples of frictional structure for use in such environments are disclosed by U.S. Patent Nos. 1,935,713; 2,821,271; 2,973,336; 2,251,410; 2,783,529; 2,966,737; 2,850,118 and 3,191,734. The structure disclosed by each of these patents do not rely on any other material for supporting and resisting the frictional strain experienced during a brake application.

A prior art reinforcement system teaches the placing of the reinforcement material entirely within the frictional material, whereby greater internal structural support of the frictional material is achieved. This internal reinforcement may assume a variety of configurations, including a special structure for later securing that embedded material to the supporting structure of the frictional system. U.S. Patent Nos. 1,182,368; 2,464,437; 2,818,634; 3,064,343 and 3,698,526 disclose such internally embedded reinforcement within a frictional material. However, when a reinforcement material is embedded within the frictional material as taught by U.S. Patent 4,278,153 it can effect the coefficient of friction of the friction material.

Unfortunately, such additional reinforcing materials and/or structure adds to the cost of a friction lining and have not been acceptable to customers of automobile manufacturers. Currently, the most commonly used method of attaching a friction material to a metal backing plate to produce a brake lining for an automobile involves the following steps: passing the backing plate through a first degreasing chamber; rotoblasting the backing plate to remove oxidation; passing the backing plate through second degreasing chamber; dipping the backing plate in a solution of organosilane esther in isoproponal; drying the metal backing plate; applying a resin coating to a fixed area, partially curing the resin; aligning a friction material with the fixed area; pressing the friction material to the backing plate; and thereafter curing the resin coating and resin in the friction material to produce a physical bond between the backing plate and friction material. Unfortunately, under some operating conditions the temperature generated during a brake application can cause the resin coating to degenerate and as a result the friction material may be sheared from the metal backing plate.

## SUMMARY OF THE INVENTION

The invention disclosed herein is an improved process for attaching a friction material to a metal backing plate to produce a brake lining. In this process, a metal backing plate is transported to a first station where oxidation is removed through a sand blast technique to clean at least one side thereof. Thereafter, the metal backing plate is transported to a second station where molten metal particles are sprayed on the cleaned surface. The molten particles on striking the cleaned surface adheres thereto to form a rough surface. The metal backing plate is transported to a third station where a friction material is aligned with the rough surface. The backing plate and aligned friction material are transported to a cure press where the resin in the friction material is cured. During the curing process, the viscosity of the resin is such that some flow takes place to establish a mechanical bond with the rough surface. Thereafter the parts are then post-cured in an oven.

When compared with the prior art, the strength of the bond between the metal backing plate and the friction material is improved. To further enhance the improvement process of attaching the friction material to the backing plate, the metal spraying of the molten metal at the second station was broken into two stages. In the first stage, the pressure of compressed air was increased to increase the atomization and the distance the atomized particles traveled before engaging the backing plate was reduced to form a smooth bond coating. In the second stage, the pressure of the compressed air was reduced to decrease atomization while at the same time the distance the atomized particles traveled before striking the bond coating was increased to produce a rough surface. A resin coating was directly applied to the rough surface and partially cured or staged. Thereafter, the friction material was aligned over the rough surface and a compressive force applied during the curing of the resins. When compared with the prior art, this bond showed a shear strength of about twofold when compared to the previous process of attaching a friction material to a metal backing plate.

An advantage of the process disclosed in this invention of producing a brake lining occurs through a reduction in time and steps required to prepare a metal surface for the bonding of a friction material thereto while at the same time increasing the shear strength in the resulting mechanical bond.

It is an object of this invention to provide a process of producing a brake lining whereby atomized molten metal particles are sprayed onto a metal backing plate to form a rough surface which cooperates with a resin coating to form a mechanical bond for attaching a friction material to the metal backing plate to form such brake lining.

These and other objects should be apparent from reading the specification while viewing the drawing therein.

## BRIEF DESCRIPTION OF THE DRAWINGS

Figure 1 is a schematic illustration of a first station in a manufacturing line where oxide is removed from a metal backing plate;

Figure 2 is a schematic illustration of a second station where atomized molten metal particles are sprayed onto the metal backing plate to form a rough surface;

Figure 3 is a schematic illustration of a third station where a resin coating is applied to the rough surface;

Figure 4 is a schematic illustration of a fourth station showing the resin coating being dried or staged;

Figure 5 is a schematic illustration of the fifth station where a friction material is aligned over the rough surface of the metal backing plate;

Figure 6 is a schematic illustration of a sixth station where the resin coating and friction material are cured to produce a brake lining;

Figures 7, 8, 9, 10 and 11 are enlarged views of a cross-section taken through samples of brake linings, and

Figure 12 is a graph showing the shear load of a bond produced in the brake lining of Figures 8, 9, 10 and 11.

## DETAILED DESCRIPTION OF THE INVENTION

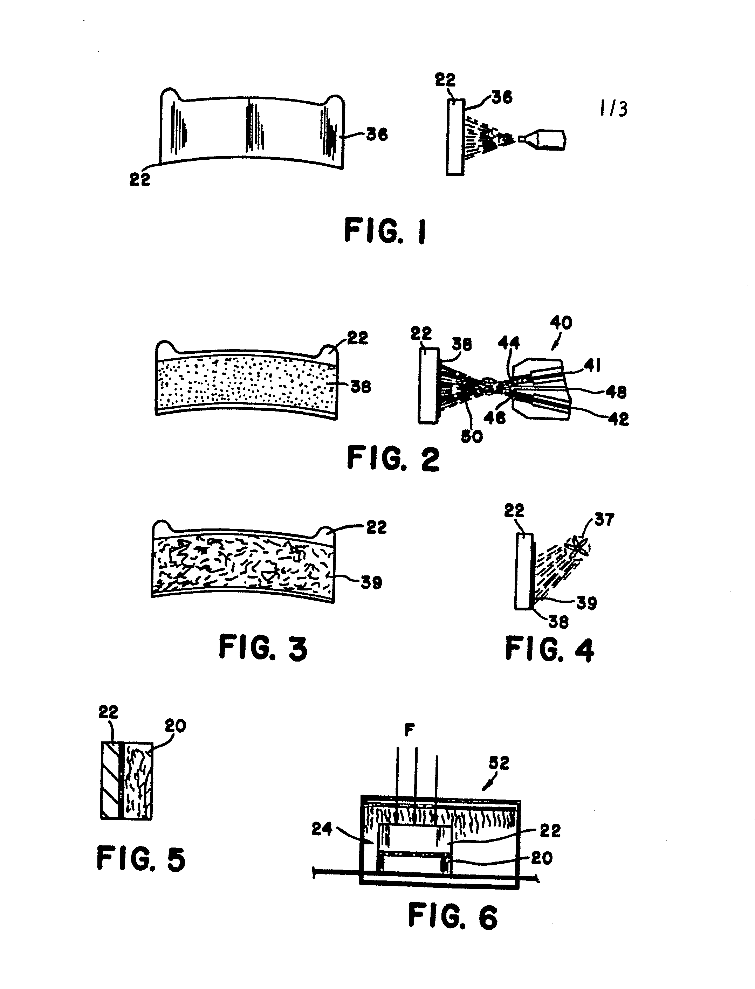

The drawings shown in Figures 1 through 6 show a schematic illustration of a process whereby a friction material 20 is attached to a backing plate 22 to produce a brake lining 24.

In the prior art the processes of manufacturing a brake lining most currently used involve riveting or bonding a friction material to a metal backing plate. Both of these processes involve many steps which are reflected in the costs of such brake linings.

For instance, in riveting the friction material to the backing plate, holes must be drilled, rivets aligned and impacted to achieve a mechanical connection. Unfortunately, the holes detract from the efficiency of the friction lining and the rivet heads once the lining has worn to their depth can effect both the coefficient of friction and cause wear of a corresponding mating surface. As a result, in the majority of the brake lining currently produced, the friction material is bonded to the backing plate by a resin binder. In this bonding process, the metal backing plate passes through a first degreasing chamber after which oxidation is removed by rotablasting with a grit medium, then passed through a second degreasing chamber. The cleaned metal backing plate is dipped into a 2% solution of organosilane esther in isoproponal and thereafter dried. When the metal backing plate is dried a coating of phenolic resin is applied to a fixed area on the face of the backing plate. The phenolic resin is dried such that it is sticky to the touch but does not have sufficient vecosity to run, this state is commonly called "B" staging. Thereafter a friction material is aligned over the staged resin and a compressive force of 6000-7000 #/ in$^2$ is applied to hold the friction material in alignment with the metal backing plate. The resin coating and resin in the friction material are cured in a cure press to produce the brake lining, post-curing may be done in an oven. Since this bonding process is the most widely used method of attaching a friction lining to a metal backing plate to produce a brake lining, it was used as a base line to evaluate the process disclosed by the invention set forth herein.

It had been observed that under some operating conditions when a brake lining was exposed to high thermal energy about 500° F, the bond between the backing plate and friction material deteriorated. If such a lining was subjected to repeated or continuous exposure to such temperatures, the friction material may separate from the metal backing plate.

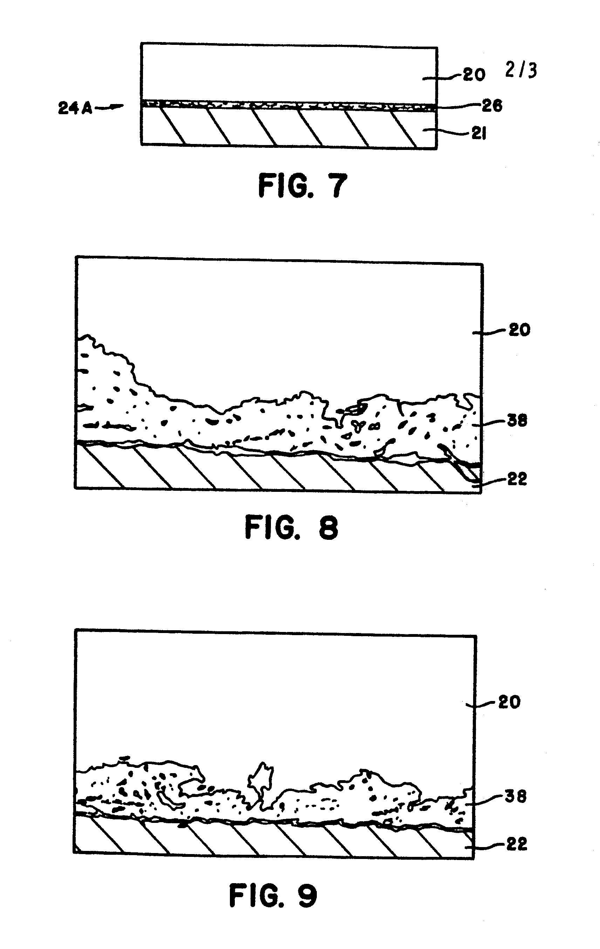

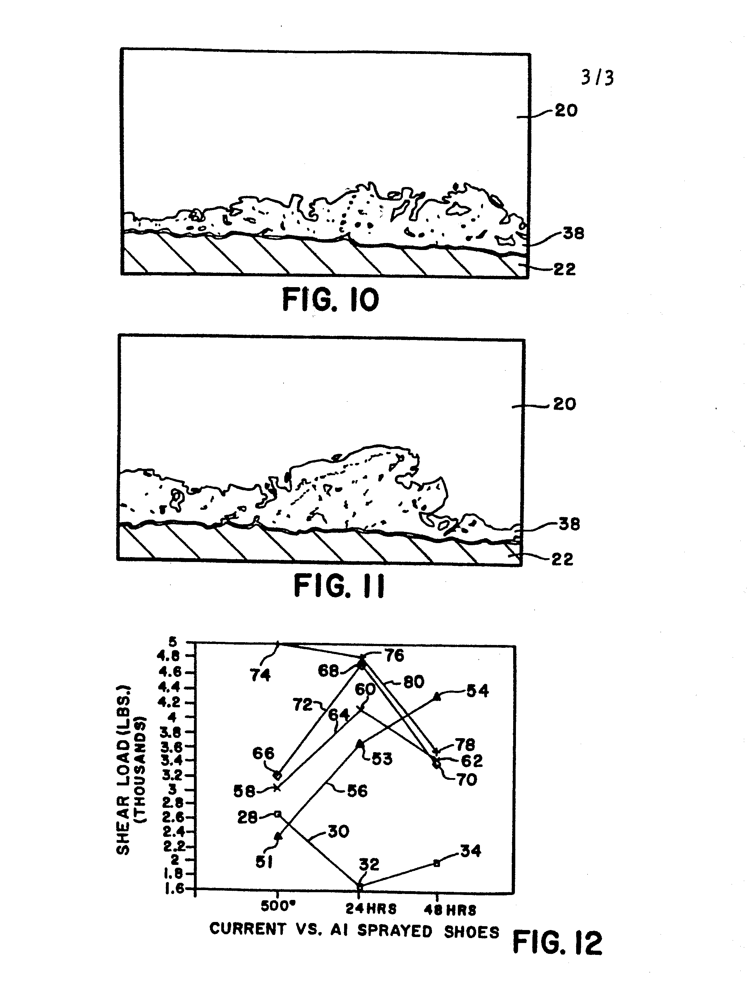

To evaluate the mechanical bond produced by this method of manufacture several brake linings were manufactured according to the standard process. A cross-section from a first sample was taken through a brake lining 24A and as shown in Figure 7, a smooth resin bond 26 is produced between the backing plate 21 and friction material 20. A second brake lining sample was subject to a temperature of 500°F for a time of 5 minutes. Thereafter the brake lining was placed in a test fixture and a lateral force applied to shear the friction material from the backing plate. Point 28 on line 30 of Figure 12 indicate the force required to shear this mechanical bond. A third brake lining sample was subjected to the 550°F temperature for 24 hours and a fourth brake lining sample was subjected to the 550°F temperature for 48 hours. Points 32 and 34 illustrate the shear loads required to shear the bond for these samples. Curve 30 clearly illustrates that the bond deteriorates in a rapid manner after being subjected to high temperatures.

In the inventive process disclosed herein, metal backing plate 22 was cleaned at a first station illustrated in Figure 1 by removing oxidation and other grime that may have accumulated thereon after the backing plate was manufactured. The oxidation was removed by sand blasting the surface 36 and is an economical step since the sand can be cleaned and used over again. After the metal backing plate 22 was cleaned, it was transferred to a second station shown in figure 2 where a molten metal coating 38 was applied to the cleaned surface 36. The metal coating 38 was applied through an electrical arc system 40 manufactured by METCO Corporation, a subsidiary of Perkin Elmer under the trade name METCO 4R. In this system two metallizing wires 41-42 are fed at a uniform rate of speed through electrical contact blocks 44 and 46, respectively. Electrically energized, the wires are precisely guided toward an intersecting point. Once energized, the wires are surrounded by an ionized field. When the wires intersect, an electrical arc is established and maintained between the wires. A nozzle 48, located directly behind the intersection point of the wires, blast high velocity pressurized air onto the molten wire tips to produce a fine metal spray 50. The high velocity pressurized air propells the atomized particles onto the cleaned surface of the metal backing plate 22. As the molten particles strike the backing plate 22, they flatten out and form thin platelets which adhere to the backing plate to form a rough surface for the metal coating 38. The wire used in the invention was aluminum but it is felt that any metal, such as bronzes, zinc, stainless steel and exothermic nickel aluminum that has a melting point below that of a combustion flame could be used to produce the molten metal particles.

After these backing plates were arc sprayed with the molten metal 50 and a friction material 20 of the type disclosed in U.S. Patent 3,835,118 was placed over the rough surface, see figure 5. Thereafter, three specimens identified as shoes "B" were transported to a

0254827

press 52, shown in figure 6, and the resin in the friction lining cured. During the cure cycle, a compressive force (F) of 7000 #/ $in^2$ was placed on the friction material. A cross-section from one of the specimen was cut and when viewed under a microscope produced the image shown in Figure 8. Although some of the backing plate has not been coated by the molten metal particles, as can be seen, some of the resin in the friction material 20 has established a mechanical bond with the rough surface.

Thereafter, specimens of shoe B were subjected to a temperature of 500°F for 5 minutes, and 550°F for 24 hours and 48 hours. Points 51, 53 and 54, respectively in Figure 12, indicate the forces required to shear the bond in specimen "B" between the backing plate and friction material. On inspection of the backing plate, it was observed that part of the aluminum coating or metal particles were sheared off. Thus, even though curve 56 in Figure 12 shows an improvement over the base line curve 30, it was felt that the process could be improved.

Thereafter three additional backing plates were cleaned by sand blasting and transported to the second station shown in Figure 2. The nozzle of the spray gun of the arc system 40 was adjusted to a position of about 12 inches from the backing plate 22. It was previously observed that spraying of metal at a closer distance and with higher atomization would produce a metallurgical bond between the molten particles and the metal backing plate because of an exothermic reaction. After the rough coat was produced on these backing plates by arc spraying, they were designated as shoe "C". Specimens of shoe "C" were transported to a third station shown in Figure 5 and friction material of the type used with shoe B placed on the rough surface. The aligned friction material and backing plate were transported to a press 52. During the cure cycle compressive force of 7000 p.s.i. was placed on the friction material. After curing, a cross-sectional specimen was cut from one of the shoes "C". When viewed under a microscope, this specimen produced an image as shown in Figure 9. When Figure 9 is compared with Figure 8, it should be evident that the surface, while still rough, does not have as thick a coating.

Specimens of shoe "C" were heated to 500°F for 5 minutes, and 550°F for 24 hours and 48 hours. When placed in a test fixture, the forces required to shear the backing plate from the friction material for specimens of shoe "C" are illustrated by points 58, 60, 62 on line 64 in Figure 12. When the backing plate of specimen for shoe "C" was observed it was found that the shear took place through the friction material and the bond was not the weak point in the brake lining.

To further evaluate this process, it was felt that the metal spraying may be improved if it were applied in two applications with a first coating to establish a metallurgical bond through an exothermic reaction with the backing plate and the second coating used to produce a rough surface. A first coating was applied to the metal backing plate 22 with the nozzle of the spray gun of the arc system 40 at a distance of about 1 1/2 inches. The first coating was very fine as the pressurized air atomized the molten metal into a fine mist. The second coating was produced with the molten metal traveling a distance of about 3 inches before engaging the first coating. After the molten metal coating had cooled, the backing plate 22 was transported to a station shown in Figure 3 where a phenolic resin 39 was applied over the rough metal coating 38. The phenolic resin was dried as illustrated in Figure 4 by a fan 37 to remove some of the volatiles therein such that the surface was sticky to the touch. Thereafter, the friction material 20 was aligned on the backing plate and transported to the curing press 52. The friction material was compressed with respect to the backing plate 22 at 7000 p.s.i. When cured this specimen was identified as shoe "D". A cross-section was cut from shoe "D" and when viewed under a microscope produced an image as shown in Figure 10. Figure 10 indicates that the metallic coating of shoe D has the most even distribution of the molten metal particles. Thereafter, specimens of shoe D were subjected to temperature of 500°F for 5 minutes, and 550°F for 24 hours and 48 hours. When placed in a test fixture, the shear forces required to separate the backing plate from the friction material for shoe D is illustrated by points 66, 68 and 70 on line 72 in Figure 12. As compared with the base line 30, shoe D has greater shear strength even though it was unconfined during the post-cure cycle in the oven.

Three additional metal backing plates 22 were cleaned through the sand blast process illustrated in Figure 1 and transported to the metal arc spraying system 40 illustrated in Figure 2. A two stage spray application was applied to the cleaned metal backing plate 22. In the first spray, a bond coat was applied. The bond coat was applied with the nozzle of the arc spray system 40 at a distance of about three inches and the rough coating was applied with the nozzle at about seven inches. A phenolic resin coating 39 was sprayed on the rough metal surface 38 and dried to the touch or staged as illustrated by Figures 3 and 4. The friction material 20 was aligned on the metal backing plate 22 and transported to a cure press 52 where a force (F) of 7000 #/ in$^2$ was applied during the curing of the phenolic resin in the coating and the friction material to produce a brake lining identified as shoe "A". A cross-sectional sample was cut from shoe A and when viewed under a microscope exhibited an image illustrated in Figure 11. When Figure 11 is compared with Figure 10, it is evident that, a bond coat provides a good interface between the metal shoe 22 and the molten metal particles 38, and the surface roughness is increased as the distance that the molten metal travels before striking the bond coating.

Thereafter, specimens of shoe A were heated to a temperature of 500°F for 5 minutes, and 550°F for 24 hours and 48 hours. When placed in a test fixture the shear force required to separate the metal backing plate from the friction material is illustrated by points 74, 76, 78 on curve 80 in Figure 12. On viewing the backing plate and friction material of shoe A, it was observed that failure occurred in the friction material and the bond was completely retained on the backing plate.

When curve 80 is compared with the other curves in Figure 12, it is apparent that this process of attaching a friction material to a metal backing plate provides an increase in shear loads which is almost double that of the baseline 30. Even after the brake lining of shoe A was subjected to the 550°F temperature for 48 hours, the shear load is greater than the initial baseline shear load. On studying the metal backing plates and friction lining after the shear test, it was observed that the shear occurred in the friction material for shoes A, C & D. Thus, the bond is not considered the weak link in the brake lining and this process provides an improvement over the prior art.

What I claim is:

1. A process for attaching a friction material to a metal backing plate to produce a brake lining comprising the steps of:

transporting said metal backing plate to a first station where oxidation, grit and other contaniments are removed from at least one surface;

transporting said metal backing plate to a second station where compressed air atomizes a molten metal and projects the resulting molten metal particles onto said one surface, said molten metal particles striking and adhering said one surface to form a rough surface;

transporting said metal backing plate to a third station where said friction material is aligned on said rough surface; and

transporting said metal backing plate to a fourth station where the temperature is sufficient to cure a binder in said friction lining, said temperature causing a portion of said binder to flow into said rough surface and form a mechanical bond between said friction material and metal backing plate to produce said brake lining.

2. The process as recited in Claim 1 wherein said step of removal of contaniments from at least one surface includes:

sandblasting the one surface to remove the contaniments without effecting the dimensions of the metal backing plate.

3. The process as recited in Claim 2 wherein said step of forming said rough surface includes the step of:

adjusting the atomizing air pressure and the distance through which the molten metal particles travel to control the resulting surface roughness.

4. The process as recited in Claim 3 wherein said step forming said rough surface includes the steps:

applying a first coating of said molten metal particles to said one surface where the distance through which the molten particles travel is less than three inches to produce a bond surface; and

applying a second coating of said molten metal particles to said bond surface at a distance greater than three inches to produce said rough surface.

5. The process as recited in Claim 4 wherein said step of curing the binder includes:

applying a compressive force to said friction material to improve the mechanical bond between said rough surface and friction material.

6. The process as recited in Claim 5 further including the steps of:

applying a resin coating to said rough surface before transporting the metal backing plate to the fourth station.

7. The process as recited in Claim 6 further including the step of:

drying the resin coated metal backing plate to remove the carrier for the resin.

8. The process as recited in Claim 4 further including the step of:

applying a resin coating to said rough surface before transporting the metal backing plate to the fourth station.

9. The process as recited in Claim 8 further including the step of:

drying the resin coated metal backing plate to remove the carrier for the resin.

10. The process as recited in Claim 9 wherein the step of curing the binder includes:

applying a compressive force to said friction material to improve the mechanical bond between the rough surface and friction material.

FIG. 1

FIG. 2

FIG. 3

FIG. 4

FIG. 5

FIG. 6

24A →   20   2/3
         26
         21

**FIG. 7**

         20

         38

         22

**FIG. 8**

         20

         38

         22

**FIG. 9**

FIG. 10

FIG. 11

CURRENT VS. AI SPRAYED SHOES

FIG. 12